# EUROPÄISCHE PATENTSCHRIFT

(11) **EP 1 283 274 B1**
(45) Veröffentlichungstag und Bekanntmachung des Hinweises auf die Patenterteilung: **31.10.2007**
(21) Anmeldenummer: 01120859.2
(22) Anmeldetag: 30.08.2001
(51) Int. Cl.: C22B 11/00, C22B 11/02, B22F 9/16, H01M 4/92, H01M 8/00

(54) **Chlorarme Platin- und Platinlegierungspulver mit erhöhter spezifischer Oberfläche und Verfahren zu ihrer Herstellung unter Verwendung einer Nitratsalzschmelze**
low chlorine platinum and platinum alloy powders with increased specific surface area and process for the preparation thereof using a nitrate salt melt
Poudres de platine ou d'un alliage du platin exempt de chlore à surface spécifique élevée et procédé de leur préparation moyennant un bain de sels de nitrates en fusion

(30) Priorität: 04.08.2001 EP 01118930
(43) Veröffentlichungstag der Anmeldung: 12.02.2003
(73) Patentinhaber: Umicore AG & Co. KG, 63457 Hanau-Wolfgang (DE)
(72) Erfinder: Biberbach,Peter, 63517 Rodenbach (DE)
(74) Vertreter: Vossius & Partner

(56) Entgegenhaltungen:
- EP-A- 0 557 673
- DE-A- 1 796 325
- DE-A- 2 233 677
- GB-A- 1 109 890
- DATABASE WPI Section Ch, Week 197807 Derwent Publications Ltd., London, GB; Class A85, AN 1978-13514A XP002223119 & SU 506 266 A (AS SUSR ELECTROCHEM), 30. Mai 1977 (1977-05-30)
- DATABASE WPI Section Ch, Week 200173 Derwent Publications Ltd., London, GB; Class E12, AN 2001-629482 XP002223120 & JP 2001 205086 A (ISHIFUKU KINZOKU KOGYO KK), 31. Juli 2001 (2001-07-31)
- DATABASE WPI Section Ch, Week 198607 Derwent Publications Ltd., London, GB; Class E32, AN 1986-044483 XP002223121 & JP 60 210514 A (ELEC POWER RES INST), 23. Oktober 1985 (1985-10-23)
- DATABASE COMPENDEX [Online] ENGINEERING INFORMATION, INC., NEW YORK, NY, US; Journal of Power Sources, 1999 LASCH K. ET AL.: "Effects of metal oxides as co-catalysts for the electro-oxidation of methanol on platinum-ruthenium" Database accession no. E2000104980171 XP002223118
- DATABASE WPI Derwent Publications Ltd., London, GB; AN 1995-175241 & JP 07 097221 A (TANAKA KIKINZOKU KOGYO) 11. April 1995 (1995-04-11)
- DATABASE WPI Week 199826 Derwent Publications Ltd., London, GB; AN 1998-292442 & JP 10 102104 A (TANAKA KIKINZOKU KOGYO KK) 21. April 1998 (1998-04-21)

## Beschreibung

Die Erfindung betrifft Platin- oder Platinlegierungspulver, vorzugsweise Platin/Ruthenium-Legierungspulver sowie Verfahren zu ihrer Herstellung. Die Metallpulver sind chloridarm, besitzen eine hohe Oberfläche und werden bevorzugt als Katalysatoren in chemische Reaktionen (wie beispielsweise Hydrierungen) und in Brennstoffzellen eingesetzt

Platin/Ruthenium-Katalyatoren werden von L.W. Niedrach et al. (J. Electrochemical Techn. 5, 1967, S. 318) als Anodenkatalysatoren für schwefelsaure Brennstoffzellen beschrieben. Diese Katalysatoren weisen eine geringe Vergiftungsneigung gegenüber Kohlenmonoxid auf. Sie haben sich auch bei der Oxidation von Methanol bewährt und sind somit für Direkt-Methanol-Brennstoffzellen (DMFC = Direct Methanol Fuel Cell) geeignet (Lasch et al., J. Power Sources (1999), 84(2), 225 bis 230). Sie werden häufig über das sogenannte Adams-Shriner-Verfahren hergestellt

In SU-A-506266 wird ein bestimmtes Verfahren zur Herstellung eines Katalysators beschrieben, bei dem ein kohlenstoffhaltiges Material mit Diaminonitronitronitratoplatin (I) in wässrigem Alkohol imprägniert wird und unter Erwärmung bei 250 bis 300°C reduziert wird. In dem in JP-A-2001/205086 beschriebenen Verfahren zur Herstellung von mit PlatinRuthenium-Legierungen beladenen Katalysatoren werden bestimmte Platinkomplexe vom Amintyp und Rutheniumsalze, die kein Chlor enthalten, reduziert. In dem in JP-A-07/097221 beschriebenen Verfahren zur Herstellung von Hexahydroxoplatinsäure wird Natriumhexahydroxoplatinat durch In-Kontakt-Bringen mit einer anorganischen Säure über eine Kationenaustauschmembran neutralisiert. GB-A-1,109,890 betrifft ein bestimmtes Verfahren zur Herstellung von fein verteiltem Iridium oder Ruthenium. In dem in JP-A-10/102104 beschriebenen Verfahren zur Herstellung von Platinpulver wird Platin, das in Calciumhydroxid gelöst ist, zu einer vorbestimmten Zeit nach einer Säurebehandlung gewonnen. In Lasch et al., J. Power Sources (1999) 84, 225-230, wird die Wirkung von Metalloxiden als Co-Katalysatoren bei der Elektrooxidation von Methanol an PlatinRuthenium beschrieben.

Adams und Shriner beschreiben die Herstellung von Platin-(IV)-oxid, (J. Am. Chem. Soc. 45, 2171 (1923)). Die Herstellung und katalytische Wirkung binärer Oxide, zum Beispiel Pt/Ru-oxid, werden von P.N. Rylander et al. beschrieben (Engelhard Industries, Tech.Bull 8, 93 (1967)). Die nach diesen Verfahren hergestellten Oxide können mit Reduktionsmitteln wie Wasserstoff, Formaldehyd oder Hydrazin zu den entsprechenden Edelmetallmohren reduziert werden. Unter dem Mohr eines Metalles versteht man ein feinteiliges Metallpulver hoher spezifischer Oberfläche.

nach dem Adams-Shriner-Verfahren wird eine Salzmischung, welche aus HeXachloroplatin-(IV)-säure und einem Überschuss an Natriumnitrat besteht, in einemQuarztie-gel aufgeschmolzen und auf 500 °C erhitzt. Die Schmelze wird für eine definierte Zeit auf Temperatur gehalten und dann abgekühlt. Die erstarrte Schmelze wird in Wasser gelöst, es verbleibt ein Rückstand von Platinoxid. Dieser wird abfiltriert und ausgewaschen. Der Rückstand wird anschließend suspendiert und durch Reduktion mit einem geeigneten Reduktionsmittel, zum Beispiel Hydrazin, zu Platinmohr reduziert.

Durch Verwendung verschiedener Chloride der Platingruppenmetalle (PGM), wie zum Beispiel Hexachloroplatin-(IV)-säure und Ruthenium-(III)-chlorid, läßt sich eine Mischung der PGM-Oxide im gewünschten Verhältnis herstellen und anschließend zu den Metallen reduzieren.

Die Herstellmethode nach Adams-Shriner weist eine Reihe von verfahrensbedingten Nächteilen auf:

Das Verfahren beruht darauf, daß zunächst die chlorhaltigen Edelmetallverbindungen mit Natriumnitrat zu den entsprechenden Edelmetallnitraten umgesetzt werden, die dann bei erhöhter Temperatur zu den Edelmetalloxiden zersetzt werden. Bei der Zersetzung entstehen große Mengen Stickoxide. Das Verfahren ist deshalb umwelt- und gesundheitsbelastend. Durch die starke Gasentwicklung während des Aufschmelzens neigt die Schmelze zum Schäumen und muß unter ständiger Kontrolle gehalten werden. Durch das entweichende Gas wird noch nicht umgesetzte Hexachloroplatin-(IV)-säure mitgerissen. Dies erfordert wegen der allergenen Wirkung der Hexachloroplatin-(IV)-säure während des gesamten Herstellprozesses erhebliche Sicherheitsmaßnahmen.

Die Ansatzgröße lässt sich bei dieser Methode nur bedingt erhöhen. Adams und Shriner beschreiben Versuche mit Mischungen von 4,2 g Hexachloroplatin-(IV)-säure mit 40 g Natriumnitrat, die sich in wenigen Minuten auf die gewünschte Endtemperatur von zum Beispiel 500 °C erhitzen lassen. Bei größeren Ansätzen wird zum Erreichen einer homogenen Schmelze wesentlich mehr Zeit benötigt. Dadurch befinden sich einige Bereiche der Salzmischung bereits längere Zeit auf der eingestellten Temperatur, während andere noch nicht aufgeschmolzen sind. Da sowohl die Temperatur als auch die Haltezeit Partikelgröße und Oberfläche der gebildeten Oxide beeinflussen, tritt teilweise bereits ein starkes Wachstum der Oxidpartikel auf. Nach der Reduktion dieser Oxide zu den Metallen werden deshalb inhomogene, grobkörnige Pulver mit breiter Korngrößenverteilung und entsprechend geringen Oberflächen erhalten

Nach dem Erstarren der Schmelze muß sie mit großem Aufwand aus dem Tiegel herausgeschlagen oder herausgelöst werden.

Durch den Einsatz von chlorhaltigen Ausgangsmaterialien weisen die Endprodukte noch einen erheblichen Chlorgehalt auf, was für technische Anwendungen, insbesondere als Brennstoffzellen-Katalysatoren, unerwünscht ist. Hohe Chlorgehalte führen hier zu Korrosionsproblemen und Einbußen bei der Lebensdauer der Brennstoffzellensysteme.

Es war daher die Aufgabe der vorliegenden Erfindung, ein Verfahren zur Herstellung von Platin- oder Platinlegierungspulvern bereitzustellen, welches auch bei größeren Ansätzen Metallpulver mit gleichmäßig feinteiliger Partikelgröße, hoher Oberfläche und geringem Chlorgehalt liefert. Darüber hinaus sollte das Verfahren durch die Vermeidung von Stickoxidemissionen umweltverträglicher sein und das Risiko der Auslösung von Allergien in bezug auf chlorhaltige Platinverbindungen minimieren

Diese Aufgabe wird dadurch gelöst, daß man eine Schmelze bildet, die als Ausgangssubstanzen eine niedrigschmelzende Mischung von Alkalinitraten, eine chlorarme Platinverbindung und gegebenenfalls chlorarme Verbindungen der Legierungselemente enthält, die Schmelze dann auf eine Reaktionstemperatur erhitzt, bei der die Platitiverbindung und die Verbindungen der Legierungselemente thermisch zu den Oxiden zersetzt werden, die Schmelze danach abkühlt und in Wasser löst und die gebildeten Oxide oder Mischoxide durch anschließende Reduktion in Platin- oder Platinlegierungspulver überführt.

Ein weiterer Gegenstand dieser Erfindung sind die mit diesem Verfahren herstellbaren, chlorarmen Platin- oder Platinlegierungspulver.

Das erfindungsgemäße Platin- oder Platinlegierungspulver ist Metallpulver, weist eine spezifische Oberfläche nach BET größer als 40 m²/g auf und besitzt einen Chlorgehalt kleiner 100 ppm. Diese Erfindung betrifft weiterhin eine Membran-Elektrodeneinheit für eine Brennstoffzelle, die als Anoden- und/oder Kathodenkatalysator das erfindungsgemäße Platin- oder Platinlegierungspulver enthält. Schließlich betrifft diese Erfindung die Verwendung des erfindungsgemäßen Platin- oder Platinlegierungspulvers als Katalysator für Brennstoffzellen sowie die Verwendung des erfindungsgemäßen Platin- oder Platinlegierungspulvers als Katalysator für chemische Reaktionen.

Das erfindungsgemäße Verfahren unterscheidet sich ganz wesentlich von dem bekannten Adams-Shriner-Verfahren. Während bei dem Adams-Shriner-Verfahren die chlorhaltigen Edelmetallverbindungen durch Umsetzen mit Natriumnitrat zunächst in ihre Nitrate überführt werden, dient die niedrigschmelzende Mischung der Alkalinitrate im vorliegenden Fall nur als Reaktionsmedium und bleibt im wesentlichen unverändert erhalten. Durch die Temperaturerhöhung in der Schmelze werden die chlorarmen Verbindungen des Platins und der Legierungselemente thermisch zersetzt. Die Schmelze stabilisiert dabei die sich bildenden Oxidpartikel und verhindert ihre Agglomeration zu größeren Partikeln mit niedriger Oberfläche. Eine direkte thermische Zersetzung der Platinverbindung und der Verbindungen der Legierungselemente führt dagegen nicht zum Erfolg. Es bilden sich grobteilige Oxidpulver aus, die keine ausreichend hohen Oberflächen besitzen. Typischerweise können mit dem konventionelle Verfahren nach Adams-Shriner nur Produkte mit BET-Oberflächen bis zu 40 m²/g erhalten werden.

Neben der Chlorfreiheit der Pulver ist ein wesentliches Kennzeichen der vorliegenden Erfindung jedoch die Tatsache, daß damit feinteilige Platin- und Platinlegierungspulver mit sehr hoher Oberfläche (BET-Werte typischerweise größer als 40 bis 100 m²/g) hergestellt werden können. Diese Produkte zeichnen sich bei ihrer Anwendung als Katalysatoren für chemische Reaktionen oder in Brennstoffzellen durch eine sehr hohe Aktivität und Leistung aus.

Als niedrigschmelzende Mischungen von Alkalinitraten können binäre oder ternäreMischungen von Lithiumnitrat, Kaliumnitrat und Natriumnitrat verwendet werden. Vorzugsweise werden binäre und ternäre Eutektika im System LiNO₃ - KNO₃ - NaNO₃ eingesetzt, welche einen besonders niedrigen Schmelzpunkt besitzen. Während Natriumnitrat erst oberhalb von 306 °C schmilzt, liegt der Schmelzpunkt einer eutektischen Mischung von Lithiumnitrat und Kaliumnitrat bei 132 °C. Das ternäre System aus Lithiumnitrat, Kaliumnitrat und Natriumnitrat weist einen Schmelzpunkt von 120 °C auf.

Erfindungsgemäß werden im vorliegenden Verfahren chlorarme Platinverbindungen und gegebenenfalls chlorarme Verbindungen der Legierungselemente eingesetzt, wobei die Legierungselemente vorzugsweise den Platingruppenmetallen Ruthenium, Rhodium, Palladium, Osmium und Iridium angehören. Es können aber auch Unedelmetalle wie beispielsweise Vanadium, Wolfram, Molybdän oder andere zum Einsatz kommen.

Im erfindungsgemäßen Verfahren können auch die Nitrate der Edelmetalle eingesetzt werden. Hierbei ist jedoch zu bedenken, daß bei der thermischen Zersetzung dieser Verbindungen Stickoxide freigesetzt werden, die zu dem beschriebenen Schäumen der Schmelze führen und durch eine Abgasreinigung unschädlich gemacht werden müssen. Trotzdem ergeben sich auch bei Verwendung von Nitraten schon erhebliche Vorteile des erfindungsgemäßen Verfahrens gegenüber dem Adams-Shriner-Verfahren, da das Substanzgemisch aus den Edelmetallverbindungen und der Mischung der Alkalinitrate wegen der niedrigen Schmelztemperatur der Mischung sehr schnell gleichmäßig durchwärmt wird. Diese Tatsache wurde von den Erfindern als eine wesentliche Voraussetzung für die Herstellung von Edelmetallpulvern mit gleichmäßiger Kornverteilung und hoher spezifischer Oberfläche erkannt. Durch Verzicht auf den Einsatz von Hexachloroplatinsäure ist auch das Allergiepotential des Verfahrens minimiert.

Bevorzugt werden jedoch chlorarme und nitratfreie Edelmetallverbindungen verwendet. Dann ist es möglich, das Verfahren völlig ohne Stickoxidemissionen zu betreiben, da die verwendeten Alkalinitrate bei den im Verfahren zur Anwendung kommenden Temperaturen von maximal 600 °C noch nicht thermisch zersetzt werden.

Die Chlorgehalte der Ausgangsverbindungen sowie der Endprodukte werden nach dem Aufschlußverfahren von Wickboldt erfaßt und dann in wäßriger Lösung durch Ionenchromatographie (IC) bestimmt. Ermittelt wird dabei der gesamte Chlorgehalt der Verbindung, der sich aus der Summe des freien und des gebundenen Chlors zusammensetzt. Der Gesamtchlorgehalt der geeigneten Ausgangsverbindungen sollte weniger als 500 ppm betragen.

Der Gesamtchlorgehalt der Endprodukte (Platin- beziehungsweise Platinlegierungsmohre) beträgt weniger als 100 ppm, vorzugsweise weniger als 50 ppm. Höhere Chlorgehalte können zu Korrosionserscheinungen und Einbußen ihrer Lebensdauer in der Brennstoffzelle führen.

Als chlorarme und nitratfreie Platinverbindung wird bevorzugt Hexahydroxo-(IV)-platinsäure eingesetzt. Die thermische Zersetzung von Hexahydroxo-(IV)-platinsäure in der Salzschmelze führt zu Platinoxid mit einer sehr hohen Oberfläche, welches nach Reduktion ein Platinmohr mit entsprechend hoher Oberfläche ergibt. Bei Zusatz geeigneter Verbindungen von Legierungselementen lassen sich Mischoxide und nach anschließender Reduktion dieser Oxide auch Platinlegierungspülver mit hohen Oberflächen (BET-Oberflächen im Bereich 40 bis 100 m²/g) herstellen. Für die Bildung eines Platin/Ruthenium-Mohres wird als chlorarme Rutheniumverbindung bevorzugt Ruthenium-(IV)-oxidhydrat eingesetzt

Für die Herstellung der Schmelze bietet das erfindungsgemäße Verfahren zwei Verfahrensvarianten. Gemäß der ersten Variante werden die Ausgangssubstanzen, das heißt die Alkalinitrate, die Platinverbindung und gegebenenfalls die Verbindungen der Legierungselemente, miteinander vermischt und homogenisiert und dann gemeinsam bis zum Aufschmelzen erhitzt. Vorteilhafter ist es jedoch, wenn man zunächst nur die Mischung der Alkalinitrate über ihren Schmelzpunkt erhitzt und dann die chlorarme Platinverbindung und gegebenenfalls die chlorarmen Verbindungen der Legierungselemente in die Schmelze einträgt. Dies hat den Vorteil, daß die gesamte Schmelze beim Zusetzen der Edelmetallverbindungen schon eine gleichmäßige Temperatur angenommen hat, so daß sich keine stark voneinander abweichenden Partikelgrößen durch unterschiedlich lange Einwirkung hoher Temperaturen ausbilden können. Aber auch die erste Verfahrensvariante liefert noch wesentlich bessere Ergebnisse als das Adams-Shriner-Verfahren, da die eutektische Mischung der Alkalinitrate schon bei 132 °C schmilzt, so daß schon bei relativ niedrigen Temperaturen ein schneller Temperaturausgleich in der homogenisierten Mischung der Ausgangssubstanzen stattfindet.

Geht man nach der zweiten Verfahrensvariante vor, so ist es empfehlenswert, die Platinverbindung und gegebenenfalls die Verbindungen der Legierungselemente erst bei einer um 20 bis 40 °C oberhalb der Schmelztemperatur liegenden Temperatur der Schmelze zuzuführen, das heißt bei einer Temperatur zwischen 150 und 170 °C.

Die genannten Edelmetallverbindungen werden bei einer Reaktionstemperatur zwischen 400 und 600 °C zu den entsprechenden Oxiden zersetzt. Nach dem Eintragen dieser Verbindungen in die Schmelze wird diese daher auf eine Temperatur im genannten Bereich erhitzt und dann so lange bei dieser Temperatur gehalten, bis die Zersetzung abgeschlossen ist. Abhängig von der gewählten Temperatur ist die Zersetzung gewöhnlich nach einer Dauer von etwa 10 Minuten bis zu 2 Stunden beendet.

Danach läßt man die Schmelze abkühlen. Im Gegensatz zum Adams-Shriner-Verfahren ist es jedoch nicht nötig, ein völliges Erstarren der Schmelze abzuwarten. Vielmehr kann zu der noch flüssigen Schmelze in einem Temperaturbereich zwischen 200 und 150 °C gefahrlos Wasser zugesetzt werden, ohne daß es zu einer wesentlichen Dampfentwicklung kommt, da es sich hierbei um einen endothermen Prozeß handelt. Die Schmelze geht durch die Wasserzugabe kontinuierlich in eine wäßrige Lösung der Alkalinitrate über, in der die feinteiligen Oxide suspendiert sind und durch Filtrieren abgetrennt werden können. Ein zeitaufwendiges Herauslösen der erstarrten Schmelze aus dem Tiegel, wie im Verfahren nach Adams-Shriner, ist nicht notwendig.

Prinzipiell kann die Lösung der Alkalinitrate nach dem Abfiltrieren der Oxidpartikel eingeengt und erneut verwendet werden.

Der Filterkuchen wird in Wasser suspendiert, bevorzugt unter Zusatz von Natronlauge, und dann durch Zugabe eines Reduktionsmittels weitgehend zu metallischem Platin- oder Platinlegierungspulver reduziert. Geeignete Reduktionsmittel sind Hydrazin, Formaldehyd oder Natriumborhydrid, die der Suspension als wäßrige Lösungen zugesetzt werden. Die Edelmetallpulver werden durch Filtrieren von der Suspension abgetrennt und danach bevorzugt unter Vakuum bei erhöhten Temperaturen bis 100 °C getrocknet und anschließend gesiebt.

Bei der Herstellung der Oxide nach dem erfindungsgemäßen Verfahren ist kein, beziehungsweise nur ein sehr geringer, Einfluß der Temperatur auf ihre spezifische Oberfläche festzustellen. Eine Skalierung der Herstellung ist deshalb problemlos möglich. Durch Zusatz von Wasser in Mengen von wenigen Prozent, zum Beispiel 1 bis 5 Gew.-%, läßt sich der Schmelzpunkt der Eutektika auf Temperaturen von unter 100 °C absenken. Die Absenkung der Schmelztemperatur ist in beiden Verfahrensvarianten möglich. Dies ermöglicht die Verwendung von Verbindungen, die nicht oder nur sehr schwierig in fester Form darstellbar sind. So kann zum Beispiel Ruthenium in Form einer wässrigen Lösung von Trinitratonitrosyl-Ruthenium-(II) mit einem Rutheniumgehalt von 15 Gew.-% eingesetzt werden. Beim Erhitzen der Schmelze wird das Wasser über einen weiten Temperaturbereich gefahrlos abgegeben. Das Trinitratonitrosyl-Ruthenium-(II) wird zunächst in der Schmelze gelöst und zerfällt beim weiteren Erhitzen in gewünschter Weise unter Bildung des Oxids.

Bei der thermischen Zersetzung von Trinitratonitrosyl-Ruthenium-(II) werden allerdings wieder Stickoxide freigesetzt. Da es sich hierbei nur um eine der beiden Legierungskomponenten handelt, sind die Stickoxidemissionen aber immer noch geringer als beim Adams-Shriner-Verfahren

Die Erfindung wird durch die folgenden Beispiele näher erläutert.

Die Partikelgröße der Pulver wird mittels Röntgenbeugung (XRD) aus der Verbreiterung der Beugungsmaxima bestimmt.

Die Bestimmung der spezifischen Oberflächen erfolgt durch Stickstoffadsorption nach Brunauer, Emmett und Teller (BET) gemäß DIN 66131.

### Beispiel 1:

1 kg einer Mischung von 65 % Kaliumnitrat und 35 % Lithiumnitrat werden in einem geeigneten Tiegel aufgeschmolzen und auf 150°C erhitzt. In die Schmelze werden 100 g Hexahydroxoplatin-(IV)-säure eingetragen und ihre Temperatur auf die Reaktionstemperatur von 450 °C erhöht. Nach einer Haltezeit von 90 Minuten ist die Bildung von Platinoxid abgeschlossen. Danach wird die Schmelze abgekühlt, bei Temperaturen zwischen 150 und 170 °C mit Wasser verdünnt und weiter auf Raumtemperatur abgekühlt. Die Lösung wird abfiltriert und der Rückstand ausgewaschen. Der Filterkuchen wird in 1500 ml einer 3 %-igen Natronlauge suspendiert und mit 800 ml einer 6 %-igen Hydrazinlösung reduziert. Anschließend wird der Feststoff abfiltriert unter Vakuum bei 65 °C getrocknet und gesiebt

Das Platinpulver wird als Katalysator bei der Hydrierung von Zimtsäure eingesetzt und zeigt dabei eine sehr hohe Hydrieraktivität.

| | |
|---|---|
| Partikelgröße (XRD): | 4,2 nm |
| BET-Oberfläche: | 52 m²/g (gemessen nach DIN 66131) |
| Gesamtchlorgehalt: | < 30 ppm |

### Beispiel 2:

1 kg einer Mischung von 65 % Kaliumnitrat und 35 % Lithiumnitrat werden in einem geeigneten Tiegel aufgeschmolzen und auf 150°C erhitzt. In die Schmelze werden 100 g Hexahydroxoplatin-(IV)-säure eingetragen und ihre Temperatur auf die Reaktionstemperatur von 500 °C erhöht. Nach einer Haltezeit von 30 Minuten ist die Bildung von Platinoxid abgeschlossen. Danach wird die Schmelze abgekühlt, bei Temperaturen zwischen 150 und 170 °C mit Wasser verdünnt und weiter auf Raumtemperatur abgekühlt. Die Lösung wird abfiltriert und der Rückstand ausgewaschen. Der Filterkuchen wird in 1500 ml einer 3 %-igen Natronlauge suspendiert und mit 800 ml einer 6 %-igen Hydrazinlösung reduziert. Anschließend wird der Feststoff abfiltriert und unter Vakuum bei 65 °C getrocknet und gesiebt.

| | |
|---|---|
| Partikelgröße (XRD): | 4,4 nm |
| BET-Oberfläche: | 47 m²/g |
| Gesamtchlorgehalt: | < 30 ppm |

Das Platinpulver wird als Katalysator (für Anode und Kathode) in einer PEM-Brennstoffzelle mit Wasserstoff/Luft-Betrieb verwendet und ergibt sehr gute, langzeitstabile Leistungswerte. Außerdem weist das Material auch sehr gute Leistungswerte bei der Verwendung als Kathodenkatalysator in einer DMFC-Brennstoffzelle auf.

Diese beiden Beispiele zeigen, daß die Partikelgröße nur im geringen Maße durch die Reaktionstemperatur bei der Zersetzung der Edelmetallverbindungen beeinflußt wird.

### Beispiel 3:

1 kg einer Mischung von 65 % Kaliumnitrat und 35 % Lithiumnitrat werden in einem geeigneten Tiegel aufgeschmolzen und auf 150 °C erhitzt. In die Schmelze werden 51,5 g Hexahydroxoplatin-(IV)-säure und 28,5 g Ruthenium-(IV)-oxidhydrat eingetragen und die Temperatur auf 500 °C erhöht. Nach einer Haltezeit von 30 min wird die Schmelze abgekühlt, bei Temperaturen zwischen 150 und 170 °C mit Wasser verdünnt und weiter auf Raumtemperatur abgekühlt. Die Lösung wird abfiltriert und der Rückstand ausgewaschen. Der Filterkuchen wird in 1500 ml einer 3 %-igen Natronlauge suspendiert und mit 800 ml einer 6 %-igen Hydrazinlösung reduziert. Anschließend wird der Feststoff abfiltriert und unter Vakuum bei 65 °C getrocknet und gesiebt.

Das Material wird als Anodenkatalysator für eine Direktmethanolbrennstoffzelle (DMFC) eingesetzt und zeigt sehr gute Leistungswerte im Methanol/Luft-Betrieb. Aufgrund des niedrigen Chlorgehaltes weist die DMFC eine hohe Langzeitstabilität auf.

| | |
|---|---|
| Pt/Ru-Verhältnis: | 50 : 50 (Atom-%) |
| Partikelgröße (XRD): | 5,2 nm |
| BET-Oberfläche: | 84 m²/g |
| Gesamtchlorgehalt: | < 40 ppm |

### Vergleichsbeispiel 1 (VB 1)

1,2 kg Natriumnitrat werden mit 80g Hexachloroplatin (IV) - säure (40 Gew.% Pt) und 43g Ruthenium (III) - chlorid (39 Gew. % Ru) homogen vermischt, in einem geeigneten Tiegel gefüllt und aufgeschmolzen. Die Temperatur wird langsam bis auf 500°C erhöht. Nach einer Haltezeit von 30 min wird die Schmelze auf Raumtemperatur abgekühlt. Der Schmelzkuchen wird mit demineralisiertem Wasser aus dem Tiegel gelöst, die Lösung wird abfiltriert und der Rückstand ausgewaschen. Der Filterkuchen wird in 1500 ml einer 3 %-igen Natronlauge suspendiert und mit 800 ml einer 6 %-igen Hydrazinlösung reduziert. Anschließend wird der Feststoff abfiltriert und unter Vakuum bei 65 °C getrocknet und gesiebt.

| | |
|---|---|
| Pt/Ru-Verhältnis: | 50:50 (Atom-%) |
| Partikelgröße (XRD): | 5,2 nm |
| BET-Oberfläche: | 37 m²/g |
| Gesamtchlorgehalt: | 836 ppm |

### Beispiel 4:

1 kg einer Mischung von 65 % Kaliumnitrat und 35 % Lithiumnitrat werden in einem geeigneten Tiegel mit 50 ml Wasser versetzt und auf 120 °C erhitzt. In die Schmelze werden 51,5 g Hexahydroxoplatin-(IV)-säure und 114 g einer wässrigen Lösung von Trinitratonitrosyl-Ruthenium-(II) mit einem Rutheniumgehalt von 15 % eingetragen und die Temperatur auf 500 °C erhöht. Nach einer Haltezeit von 30 min wird die Schmelze abgekühlt, bei Temperaturen zwischen 150 und 170 °C mit Wasser verdünnt und weiter auf Raumtemperatur abgekühlt. Die Lösung wird abfiltriert und der Rückstand ausgewaschen. Der Filterkuchen wird in 1500 ml einer 3 %-igen Natronlauge suspendiert und mit 800 ml einer 6 %-igen Hydrazinlösung reduziert. Anschließend wird der Feststoff abfiltriert, unter Vakuum bei 65 °C getrocknet und gesiebt. Das Material wird als Anodenkatalysator in einer DMFC-Brennstoffzelle verwendet und zeigt dort gute, langzeitstabile Ergebnisse.

| | |
|---|---|
| Pt/Ru-Verhältnis: | 50:50 (Atom-%) |
| Partikelgröße (XRD): | 4,6 nm |
| BET-Oberfläche: | 87 m²/g |
| Gesamtchlorgehalt: | < 40 ppm |

## Patentansprüche

1. Platin- oder Platinlegierungspulver für die Verwendung als Katalysator in Brennstoffzellen oder in chemischen Reaktionen, wobei
das Pulver metallpulver ist, eine spezifische Oberfläche nach BET größer als 40 m²/g aufweist und einen Chlorgehalt kleiner 100 ppm besitzt.

2. Platinlegierungspulver nach Anspruch 1, wobei
das Platinlegierungspulver als Legierungselemente Edelmetalle der Platingruppe und/oder Unedelmetalle enthält.

3. Verfahren zur Herstellung von Platin- oder Platinlegierungspulvern nach Anspruch 1 oder 2, wobei
man eine Schmelze bildet, die als Ausgangssubstanzen eine niedrigschmelzende Mischung von Alkalinitraten, eine chlorarme Platinverbindung und gegebenenfalls chlorarme Verbindungen der Legierungselemente enthält, die Schmelze dann auf eine Reaktionstemperatur erhitzt, bei der die Platinverbindung und die Verbindungen der Legierungselemente thermisch zu den Oxiden zersetzt werden, die Schmelze danach abkühlt und in Wasser löst und die gebildeten Oxide oder Mischoxide durch anschließende Reduktion in Platin- oder Platinlegierungspulver überführt.

4. Verfahren nach Anspruch 3, wobei
als niedrigschmelzende Mischungen binäre oder ternäre Eutektika aus dem System LiNO₃ - KNO₃ - NaNO₃ eingesetzt werden

5. Verfahren nach Anspruch 4, wobei
zur Bildung eines Platinpulvers als chlorarme Platinverbindung Hexahydroxo-(IV)-platinsäure eingesetzt wird

6. Verfahren nach Anspruch 4, wobei
zur Bildung eines Platin/Ruthenium-Legierungspulvers als chlorarme Platinverbindung Hexahydroxo-(IV)-platinsäure und Ruthenium-(IV)-oxidhydrat als Rutheniumverbindung verwendet werden.

7. Verfahren nach Anspruch 4, wobei
zur Bildung eines Platin/Ruthenium-Legierungspulvers als chlorarme Platin-verbindung Hexahydroxo-(IV)-platinsäure und Trinitratonitrosyl-Ruthenium-(II) als Rutheniumverbindung verwendet werden.

8. Verfahren nach einem der Ansprüche 3 bis 7, wobei
man die Schmelze **dadurch** bildet, daß man eine homogenisierte Mischung aller Ausgangssubstanzen bis über ihren Schmelzpunkt erhitzt

9. Verfahren nach Anspruch 8, wobei
man der homogenisierten Mischung der Ausgangssubstanzen vor dem Aufschmelzen 1 bis 5 Gew.-% Wasser zusetzt.

10. Verfahren nach einem der Ansprüche 3 bis 7, wobei
daß man die Schmelze **dadurch** bildet, daß man zunächst nur die Mischung der Alkalinitrate über ihren Schmelzpunkt erhitzt und dann die chlorarme Platinverbindung und gegebenenfalls die chlorarmen Verbindungen der Legierungselemente in die Schmelze einträgt.

11. Verfahren nach Anspruch 10, wobei
man die Platinverbindung und gegebenenfalls die Verbindungen der Legierungselemente bei einer Temperatur zwischen 150 und 170 °C der Schmelze zusetzt.

12. Verfahren nach Anspruch 11, wobei
man die Reaktionstemperatur auf einen Wert zwischen 400 und 600 °C einstellt und die Schmelze für die Dauer von 10 Minuten bis 2 Stunden auf dieser Temperatur hält.

13. Verfahren nach Anspruch 12, wobei
man der sich abkühlenden Schmelze im Temperaturintervall zwischen 200 und 150 °C Wasser zur Lösung der Schmelze zusetzt.

14. Verfahren nach Anspruch 10, wobei
man der Mischung aus den Alkalinitraten vor dem Ausschmelzen bis 5 Gew.-% Wasser zusetzt.

15. Membran-Elektrodeneinheit für eine Brennstoffzelle, wobei die Membran- Elektrodeneinheit
als Anoden- und/oder Kathodenkatalysator Platin- oder Platinlegierüngspulver gemäß Anspruch 1 oder 2 enthält.

16. Verwendung des Platin- oder Platinlegierungspulvers nach Anspruch 1 oder 2 als Katalysator für Brennstoffzellen.

17. Verwendung des Platin- oder Platinlegierungspulvers nach Anspruch 1 oder 2 als Katalysator für chemische Reaktionen.

## Claims

1. A platinum or platinum alloy powder for use as a catalyst in fuel cells or in chemical reactions, wherein the powder is metal powder, has a BET specific surface area greater than 40 m²/g and has a chlorine content of less than 100 ppm.

2. A platinum alloy powder according to Claim 1, wherein the platinum alloy powder contains noble metals from the platinum group and/or base metals as alloying elements.

3. A process for preparing platinum or platinum alloy powders according to Claim 1 or 2, wherein a melt is formed which contains, as starting substances, a low melting mixture of alkali metal nitrates, a low chlorine platinum compound and optionally low chlorine compounds of alloying elements, the melt is then heated to a reaction temperature at which the platinum compound and the compounds of the alloying elements thermally decompose to give oxides, the melt is then cooled, dissolved in water and the oxides or mixed oxides formed are converted into platinum or platinum alloy powders by subsequent reduction.

4. A process according to Claim 3, wherein binary or ternary eutectic mixtures from the LiNO₃ - KNO₃ - NaNO₃ system are used as low melting mixtures.

5. A process according to Claim 4, wherein hexahydroxo-(IV)-platinic acid is used as a low chlorine platinum compound in order to form a platinum powder.

6. A process according to Claim 4, wherein hexahydroxo-(IV)-platinic acid is used as a low chlorine platinum compound and ruthenium-(IV)-oxide hydrate is used as a ruthenium compound in order to form a platinum/ruthenium alloy powder.

7. A process according to Claim 4, wherein hexahydroxo-(IV)-platinic acid is used as a low chlorine platinum compound and trinitratonitrosyl-ruthenium-(II) is used as a ruthenium compound in order to form a platinum/ruthenium alloy powder.

8. A process according to one of Claims 3 to 7, wherein the melt is formed by heating a homogenized mixture of all the starting substances to above its melting point.

9. A process according to Claim 8, wherein 1 to 5 wt. % of water is added to the homogenized mixture of starting substances before the melting process.

10. A process according to one of Claims 3 to 7, wherein the melt is formed by first heating only the mixture of alkali metal nitrates to above its melting point and then introducing the low chlorine platinum compound and optionally the low chlorine compounds of alloying elements into the melt.

11. A process according to Claim 10, wherein the platinum compound and optionally the compounds of alloying elements are added to the melt at a temperature between 150 and 170°C.

12. A process according to Claim 11, wherein the reaction temperature is set at a value between 400 and 600°C and the melt is held at this temperature for a period of 10 minutes to 2 hours.

13. A process according to Claim 12, wherein water to dissolve the melt is added to the melt in the temperature interval between 200 and 150°C as it is cooling.

14. A process according to Claim 10, wherein 1 to 5 wt. % of water is added to the mixture of alkali metal nitrates before the melting process.

15. A membrane electrode assembly for a fuel cell, wherein the membrane electrode assembly contains platinum or platinum alloy powder in accordance with Claim 1 or 2 as an anode and/or cathode catalyst.

16. Use of the platinum or platinum alloy powder according to Claim 1 or 2 as a catalyst for fuel cells.

17. Use of the platinum or platinum alloy powder according to Claim 1 or 2 as a catalyst for chemical reactions.

## Revendications

1. Poudre de platine ou d'alliage de platine destinée à être utilisée comme catalyseur dans les cellules de combustible ou dans les réactions chimiques,
cette poudre étant métallique et présentant une surface spécifique BET supérieure à 40m²/g et une teneur en chlore inférieure à 100 ppm.

2. Poudre d'alliage de platine selon la revendication 1,
contenant comme éléments d'alliage des métaux nobles du groupe du platine et/ou des métaux communs.

3. Procédé de fabrication de poudres de platine ou d'alliage de platine selon la revendication 1 ou 2, selon lequel
on forme un bain en fusion qui contient, comme substances de départ, un mélange de bas point de fusion de nitrates alcalins, un composé du platine à faible teneur en chlore et, le cas échéant, des composés à faible teneur en chlore des éléments d'alliage, on chauffe ensuite le bain en fusion à une température de réaction à laquelle le composé du platine et les composés des éléments d'alliage sont thermiquement décomposés en oxydes, on refroidit ensuite le bain en fusion et on le dissout dans l'eau et on transforme les oxydes ou oxydes mixtes formés en poudre de platine ou d'alliage de platine en les soumettant ensuite à une réduction.

4. Procédé selon la revendication 3,
utilisant comme mélanges de bas point de fusion, des eutectiques binaires ou ternaires du Système LiNO₃- KNO₃-NaNO₃.

5. Procédé selon la revendication 4,
utilisant pour la formation de la poudre de platine, comme composé du platine à faible teneur en chlore, de l'acide hexahydroxo-(IV)-platinique.

6. Procédé selon la revendication 4,
utilisant pour la formation d'une poudre d'alliage platine/ruthénium, comme composé du platine à faible teneur en chlore, l'acide hexahydroxo- (IV)-platinique et l'hydrate d'oxyde de ruthénium -(IV) comme composé du ruthénium.

7. Procédé selon la revendication 4,
utilisant pour la formation de la poudre d'alliage platiné/ruthénium, comme composé du platine à faible teneur en chlore, l'acide hexahydroxo-(IV)-platinique, et le trinitratonitrosyl-ruthénium-(II) comme composé du ruthénium.

8. Procédé selon une quelconque des revendications 3 à 7,
selon lequel
on forme le bain en fusion en chauffant un mélange homogénéisé de toutes les substances de départ jusqu'à une température supérieure à leur point de fusion.

9. Procédé selon la revendication 8,
selon lequel
on ajoute au mélange homogénéisé des substances de départ, avant la fusion, 1 à 5 % en poids d'eau.

10. Procédé selon une quelconque des revendications 3 à 7,
selon lequel
on forme le bain en fusion en commençant par chauffer seulement le mélange des nitrates alcalins au-dessus de leur point de fusion, puis on y introduit le composé du platine à faible teneur en chlore et, le cas échéant, les composés à faible teneur en chlore des éléments d'alliage.

11. Procédé selon la revendication 10,
selon lequel
on ajoute au bain en fusion le composé du platine et, le cas échéant, les composés des éléments d'alliage à une température située entre 150 et 170°C.

12. Procédé selon la revendication 11,
selon lequel
on règle la température de réaction à une valeur située entre 400 et 600°C et on maintient le bain en fusion à cette température pendant la durée de 10 minutes à 2 heures.

13. Procédé selon la revendication 12,
selon lequel
on ajoute au bain en fusion en cours de refroidissement, dans un intervalle de température situé entre 200 et 150 °C, de l'eau pour la dissolution du bain en fusion.

14. Procédé selon la revendication 10,
selon lequel
on ajoute au mélange constitué des nitrates alcalins, avant la fusion, 1 à 5 % en poids d'eau.

15. Unité d'électrode à membrane pour une cellule de combustible,
contenant, comme catalyseur d'anode et/ou de cathode, une poudre de platine ou d'alliage de platine selon la revendication 1 ou 2.

16. Utilisation de la poudre de platine ou d'alliage de platine selon la revendication 1 ou 2,
comme catalyseur pour les cellules de combustibles.

17. Utilisation de la poudre de platine ou d'alliage de platine selon la revendication 1 ou 2,
comme catalyseur pour les réactions chimiques.
